# EUROPEAN PATENT APPLICATION

(11) **EP 4 485 404 A1**
(43) Date of publication of application: **01.01.2025**
(21) Application number: 23182221.4
(22) Date of filing: 28.06.2023
(51) Int. Cl.: G07C 9/00, B60R 25/20

(54) **A METHOD FOR CONTROLLING A FUNCTION OF A VEHICLE BY A PREDEFINED BODY MOVEMENT**

(71) Applicant: Ningbo Geely Automobile Research & Development Co., Ltd., Ningbo, Zhejiang 315336 (CN); Zhejiang Geely Holding Group Co., Ltd., Hangzhou, Zhejiang 310051 (CN)
(72) Inventor: SETTERBERG, Johan, 41679 Göteborg (SE); LINDBERG NILSSON, Erik, 41747 Göteborg (SE); POLAMREDDY, Rajesh, 41876 Göteborg (SE); KARIKKAT SWAMIKUTTAN, Gokul, 41757 Göteborg (SE); AMBARUS, Adam, 43369 Göteborg (SE); MAYUR, Karkhile, 43336 Partille (SE)
(74) Representative: Zacco Sweden AB

(57) **Abstract**

The invention relates to a method for controlling a function of a vehicle (3) by a predefined body movement performed by a user (1) of the vehicle. The method comprises identifying the predefined body movement of the user (1), determining the orientation of the user (1) relative to the vehicle (3), and activating the vehicle function (5) provided that the predefined body movement is identified to have been performed when the user (1) is orientated relative to the vehicle (3) in a predetermined user orientation.

## Description

### TECHNICAL FIELD

The invention relates to a method and an arrangement for controlling a function of a vehicle by a predefined body movement performed by a user of the vehicle.

### BACKGROUND

Controlling vehicle functions, for example opening and closing a vehicle door, such as a tailgate for a trunk, can be a problem when the user of the vehicle has the hands occupied with carrying things. Systems allowing the user to open and close a door of the vehicle by a body gesture are developed. There are kick sensors for opening a tailgate of a vehicle. Such a system will however require that the user is positioned directly next to the vehicle balancing on one foot while operating the kick sensor placed on the underside of the vehicle with the other foot.

It is desirable that a method and system for controlling a vehicle function by a body movement can provide a convenient manoeuvring process for the user and ensure that the vehicle function is controllable only by intentional body movements in a safe way.

### SUMMARY

An objective of the invention is to provide a method for controlling a function of a vehicle by a predefined body movement, by which method the vehicle function can be controlled with improved safety.

The objective is achieved by a method for controlling a function of a vehicle by a predefined body movement performed by a user of the vehicle, wherein the method comprises identifying the predefined body movement of the user, determining the orientation of the user relative to the vehicle, and activating the vehicle function provided that the predefined body movement is identified to have been performed when the user is orientated relative to the vehicle in a predetermined user orientation.

The invention is based on the insight that by such a method, it is possible to control a vehicle function by a body movement while avoiding any unintentional activation of the vehicle function. If the user does not fulfil the predetermined user orientation, for example when leaving the vehicle, any unintentional body movement which otherwise could activate the vehicle function is rejected.

The predetermined user orientation and the requisite degree of accuracy of the orientation can be selected depending on the current vehicle function. In some applications, the predetermined user orientation can be fulfilled when the user is facing the vehicle, whereas in other applications the predetermined user orientation is fulfilled only when the user is facing the vehicle function.

A key device can be carried by the user, and the method may comprise detecting a position, orientation and/or movement of the key device carried by the user, preferably by ultra-wideband (UWB) communication between the vehicle and the key device. In this way the position, orientation and/or movement of the user can be determined. Further, a reliable way of detecting position, orientation and/or movement of the key device relative to the vehicle can be achieved, and a device already equipped with UWB transceivers can be used as the key device, such as a mobile telephone.

According to one embodiment, the method comprises identifying the predefined body movement of the user by detecting the movement of the key device carried by the user. Hereby, the body movement of the user can be determined using equipment normally carried by the user at the same time as the key device can be used for identifying that the user is authorized to activate the vehicle function.

According to a further embodiment, the method comprises identifying the predefined body movement of the user by repeatedly detecting the orientation of the key device, and preferably the predefined body movement is a motion causing the key device to move along a predefined pattern comprising a plurality of different orientations of the key device. Hereby, the predefined body movement can be identified in a safe way avoiding the vehicle function from being unintentionally activated by other motions.

According to a further embodiment, the method comprises determining the orientation of the user relative to the vehicle by detecting the orientation of the key device. Hereby, the orientation of the user can be determined using equipment normally carried by the user at the same time as the key device can be used for identifying that the user is authorized to activate the vehicle function.

According to a further embodiment, the method comprises determining the orientation of the user relative to the vehicle by repeatedly detecting the orientation of the key device when the user is moving in a direction towards the vehicle or the vehicle function, and preferably detecting the orientation of the key device at a first point in time when the user is positioned at a first distance from the vehicle and at a second point in time when the user is positioned at a second distance from the vehicle, wherein the second distance is shorter than the first distance, wherein the second point in time is immediately prior to that the predefined body movement of the user is detected, and determining the orientation of the user relative to the vehicle by comparing the orientation of the key device in the first point in time and the orientation of the key device in the second point in time. Hereby, the orientation of the user can be determined in a safe way avoiding the vehicle function from being unintentionally activated, for example when the user is faced away from the vehicle.

For example, the predefined body movement is a turning motion, and preferably the predefined body movement ends in an orientation of the user where the predetermined user orientation is fulfilled. Hereby, the user will get into the predetermined user orientation in a natural way when performing the predefined body movement making the activation of the vehicle function comfortable.

According to a further embodiment, the method comprises identifying the predefined body movement of the user and/or determining the orientation of the user relative to the vehicle by a camera. Hereby, the body movement and/or orientation of the user can be determined at the same time as the camera can be used for identifying the user by facial recognition, for instance.

According to a further embodiment, the method comprises determining the position of the user relative to the vehicle and activating the vehicle function provided that the user is positioned within a predetermined distance from the vehicle or the vehicle function. Hereby, it can be ensured that the vehicle function is not activated by mistake when it would be inappropriate because the user is too far from the vehicle or the vehicle function.

According to a further embodiment, the method comprises determining the position of the user relative to the vehicle and activating the vehicle function provided that the user is positioned within a predetermined area. Hereby, it can be ensured that the vehicle function is only activated from a position suitable for the current vehicle function.

According to a further embodiment, the method comprises checking the identity of the user and activating the vehicle function provided that the user is authorized to control the vehicle function. Hereby, any unauthorized person is prevented from controlling the vehicle function.

According to a further embodiment of the method, the key device is of a type that has an axis of orientation that is detectable and the orientation of the key device is determined based on a detection of a direction of the axis of orientation. Hereby, a safe and non-complicated way of detecting the orientation of the key device can be achieved, and a device already equipped with such an axis of orientation can be used as the key device, such as a mobile telephone.

According to a further embodiment of the method, a plurality of different vehicle functions are controllable by the predefined body movement, and preferably at least one of the plurality of different vehicle functions is activated provided that the predefined body movement is identified to have been performed when the user is positioned within a predetermined distance from said at least one vehicle function. Hereby, one and the same predefined body movement can be used for different vehicle functions where the vehicle function to be activated is selected by the distance between the user and the vehicle function.

According to a further embodiment, the method comprises indicating that the predefined body movement of the user was identified, and activating the vehicle function provided that a second predefined body movement is identified to have been performed thereafter. Hereby, safety against unintentional activation of a vehicle function is further increased.

According to a further embodiment, the method comprises indicating by an audible or visible signal that the predefined body movement of the user was identified. Hereby, the user will be informed that the body movement was approved, and if a second predefined body movement is required, the user will be informed that a second predefined body movement is expected for activation of the vehicle function.

According to another aspect of the invention, the invention relates to an arrangement for controlling a function of a vehicle by a predefined body movement performed by a user of the vehicle, wherein the arrangement comprises a control unit controlling the vehicle function, and an orientation sensor which is arranged to determine the orientation of the user relative to the vehicle, and wherein the control unit is arranged to activate the vehicle function provided that the predefined body movement is identified to have been performed when the user is orientated relative to the vehicle in a predetermined user orientation.

The invention is based on the insight that by such an arrangement, it is possible to control a vehicle function by a body movement while avoiding any unintentional activation of the vehicle function. If the user does not fulfil the predetermined user orientation, for example when leaving the vehicle, any unintentional body movement which otherwise could activate the vehicle function is rejected.

The predetermined user orientation and the requisite degree of accuracy of the orientation can be selected depending on the current vehicle function. In some applications, the predetermined user orientation can be fulfilled when the user is facing the vehicle, whereas in other applications the predetermined user orientation is fulfilled only when the user is facing the vehicle function.

According to one embodiment, the arrangement comprises a key device carried by the user by which key device the predefined body movement of the user can be identified. Hereby, the body movement of the user can be determined using equipment normally carried by the user at the same time as the key device can be used for identifying that the user is authorized to activate the vehicle function.

According to a further embodiment of the arrangement, the orientation sensor comprises at least three vehicle ultra-wideband (UWB) communication units arranged at different positions in the vehicle and one key device UWB communication unit arranged in the key device, wherein the vehicle UWB communication units and the key device UWB communication unit are arranged to communicate with each other for detecting a position and/or orientation of the key device relative to the vehicle. Hereby, triangulation or trilateration can be used for detecting the position and/or orientation of the key device relative to the vehicle.

According to a further embodiment of the arrangement, each of the vehicle UWB communication units or the key device UWB communication unit has two antennas enabling phase difference measurements for detecting the orientation of the key device relative to the vehicle. Hereby, the orientation of the key device can be detected in a reliable way.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1A is a view from above showing a user carrying a key device, such as a mobile phone, where the user is approaching the vehicle and in next step is facing the vehicle,
Fig. 1B is a view from above showing the user in Fig. 1A, where the user is approaching the vehicle and in next step is facing away from the vehicle,
Fig. 2 shows a method where the predefined body movement of the user is identified by repeatedly detecting the orientation of the key device,
Fig. 3 shows a user, a vehicle and zones close to the vehicle in which zones vehicle functions can be controlled by the user,
Figs. 4A, 4B, 4C and 4D show a method where the tailgate of the vehicle is to be opened by the user by specific predefined body movements,
Fig. 5 shows an alternative way of identifying the predefined body movement of the user and/or determining the orientation of the user relative to the vehicle, and
Fig. 6 shows a vehicle and an arrangement for controlling a function of the vehicle by a predefined body movement performed by a user of the vehicle.

### DETAILED DESCRIPTION OF EXAMPLE EMBODIMENTS

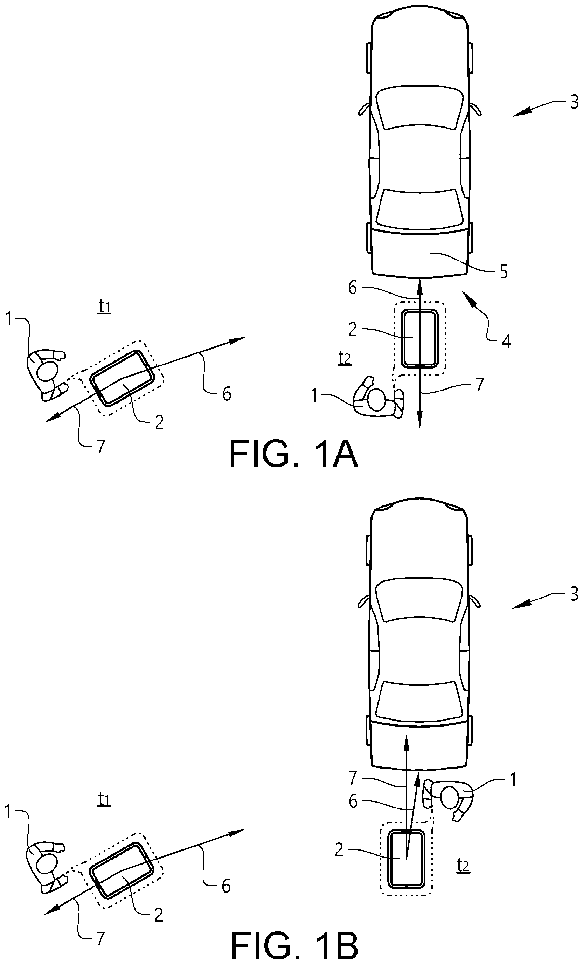

Fig. 1A shows a user 1 carrying a key device 2, such as a mobile phone, when the user 1 is approaching a vehicle 3.

A method for controlling a function of the vehicle 3 by a predefined body movement performed by the user 1 of the vehicle 3 will be described hereinafter with reference to the figures herein. The vehicle function can be any function of the vehicle 3 suitable to be remotely controlled from outside the vehicle. For example, such a vehicle function can be unlocking/locking and/or opening/closing of a door of the vehicle 3. Further examples are operating a charging lid, window or a sunroof, starting automatic parking, climate preconditioning or charging of battery.

In an example embodiment illustrated in Fig. 1A, the user 1 is approaching the vehicle 3 at the rear end 4 of the vehicle 3 in order to open a tailgate 5 of the vehicle 3.

The method comprises identifying the predefined body movement of the user 1, suitably by identifying the predefined body movement of the user 1 by detecting a movement of the key device 2 carried by the user 1. The predefined body movement can be one of many different body movements comprising lifting a leg, kicking with the foot, jumping, turning the body, taking a step forward or back, bending knees or squatting, etc.

The method further comprises determining the orientation of the user 1 relative to the vehicle 3, and activating the vehicle function provided that the predefined body movement is identified to have been performed when the user 1 is orientated relative to the vehicle 3 in a predetermined user orientation. The predetermined user orientation can be fulfilled when the user 1 is facing the vehicle, particularly when the user 1 is facing the vehicle function to be activated.

The orientation of the user 1 relative to the vehicle 3 can be determined by detecting the orientation of the key device 2, preferably by repeatedly detecting the orientation of the key device 2 when the user 1 is moving in a direction towards the vehicle 3.

The orientation of the key device 2 is suitably detected at a first point in time t₁ when the user is positioned at a first distance from the vehicle 3. In Fig. 1A, the user 1 and the key device 2 are schematically illustrated. At the timepoint t₁, the user 1 is directed towards the vehicle 3. A direction vector 6 pointing from the key device 2 towards the vehicle 3 and a normal vector 7 of the key device 2 are also illustrated in Fig. 1A. As an example only, at the timepoint t₁, the angle between the direction vector 6 and the normal vector 7 is approximately 170°.

Further, the orientation of the key device 2 is suitably detected at a second point in time t₂ when the user 1 is positioned at a second distance from the vehicle 3. The second distance is shorter than the first distance, and preferably the second timepoint t₂ is immediately prior to that the predefined body movement of the user is detected. At the timepoint t₂, the user 1 is facing the tailgate 5 of the vehicle 3. As an example only, at the timepoint t₂, the angle between the direction vector 6 and the normal vector 7 is approximately 185°.

Then, the orientation of the user 1 relative to the vehicle 3 is determined by comparing the orientation of the key device 2 in the first point in time and the orientation of the key device 2 in the second point in time. As illustrated in Fig. 1A, the angle between the direction vector 6 and the normal vector 7 is approximately the same at the first timepoint t₁ and the second timepoint t₂ which indicates that the user 1 is facing the tailgate, since when the user 1 starts to move in a direction towards the vehicle 3, the user 1 is assumed to be facing the vehicle 3.

If the user 1 would be orientated differently at timepoint t₂, such as illustrated in Fig. 1B, where the user 1 is facing away from the vehicle 3 and the tailgate 5 of the vehicle, this is indicated by the angle between the direction vector 6 and the normal vector 7. As illustrated in Fig. 1B, at the timepoint t₂, as an example only, the angle between the direction vector 6 and the normal vector 7 is approximately 10°, which is very different from the angle of 170° at the first timepoint t₁, which in turn indicates that the user 1 is facing away from the vehicle 3.

As mentioned above, the orientation of the user 1 relative to the vehicle 3 can be determined by detecting the orientation of the key device 2, preferably by repeatedly detecting the orientation of the key device 2 when the user 1 is moving in a direction towards the vehicle 3, and such detection can be used to decide whether or not the user 1 is orientated relative to the vehicle in the predetermined user orientation. Thus, activation of the vehicle function can be allowed provided that the predefined body movement is identified to have been performed when the user 1 is orientated relative to the vehicle 3 in the predetermined user orientation.

Further conditions for allowing activation of the vehicle function may also be added. For example, preferably, the user 1 must be authorised and verification of the authorisation can be made by identifying that the current key device 2 is approved. Other none limiting methods of verifying the authorisation can be verification by camera, voice recognition, biometrics, etc.

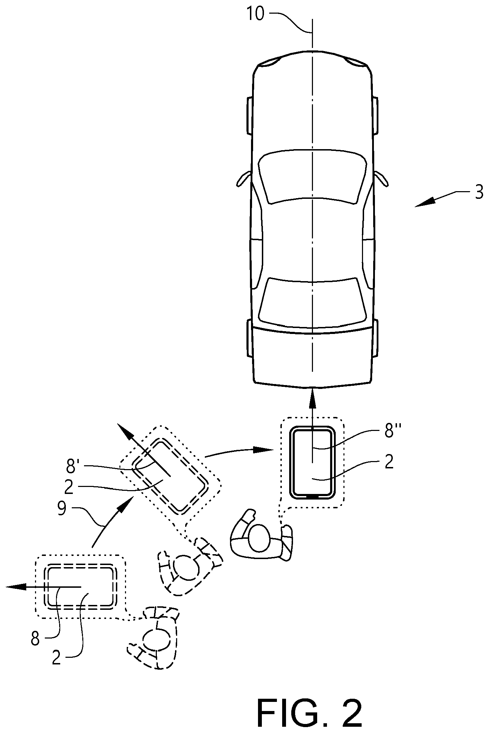

Fig. 2 is a schematic view showing an example embodiment where the predefined body movement of the user 1 is identified by repeatedly detecting the orientation 8 of the key device 2. The predefined body movement is a motion causing the key device 2 to move along a predefined pattern 9 comprising a plurality of different orientations 8, 8', 8" of the key device 2. In this case, the predefined body movement is a turning motion. The predefined body movement suitably ends in an orientation 8" of the user 1 where the predetermined user orientation is fulfilled.

As further shown in Fig. 2, the predefined body movement can be a 90 degree turning motion from a first orientation 8 of the user 1, where the user 1 is facing in a direction perpendicular to a longitudinal direction 10 of the vehicle 3, to a second orientation 8" of the user 1, where the user 1 is facing in parallel to the longitudinal direction 10 of the vehicle 3. During the turning motion, the orientation of the key device 2 is repeatedly detected to identify whether or not the predefined body movement has been performed.

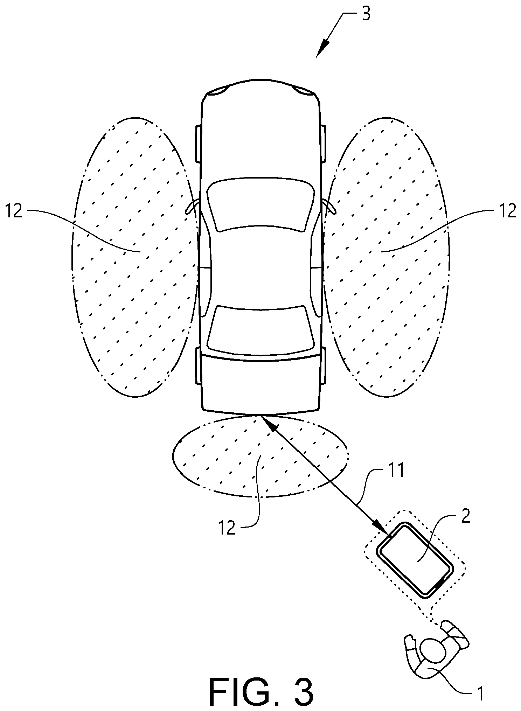

As shown in Fig. 3, for all example embodiments described herein, also the position of the user 1 relative to the vehicle 3 is suitably determined and thus the distance 11 between the vehicle 3 and the user 1 is determined. The vehicle function can be activated provided that the user 1 is positioned within a predetermined distance from the vehicle 3. For example, a maximum allowed distance between the user 1 and the vehicle 3 can be defined such that the user 1 has to be relatively close to the vehicle 3 or the vehicle function for the vehicle function to be activated. Further, such a maximum distance can be dependent on the direction in which the user 1 is distanced from the vehicle 3. Hereby, a zone or predetermined area 12 with a shape adapted to the current vehicle function within which zone the user has to be in order to activate the vehicle function can be created. One or more such zones 12 from which vehicle functions can be controlled by the user may be defined.

In some cases a plurality of different vehicle functions can be controllable by the predefined body movement. If the plurality of different vehicle functions are controllable by one and the same predefined body movement, suitably at least one of the plurality of different vehicle functions is activated provided that the predefined body movement is identified to have been performed when the user is positioned within a predetermined distance from said at least one vehicle function. By the further condition with respect to the distance between the vehicle function and the user, it is possible to make a difference between the current vehicle function and the other, and activate the desired vehicle function without activating the other vehicle functions controlled by the same predefined body movement. For example, in this way it is possible to control two or more windows of the vehicle individually by the one and the same predefined body movement.

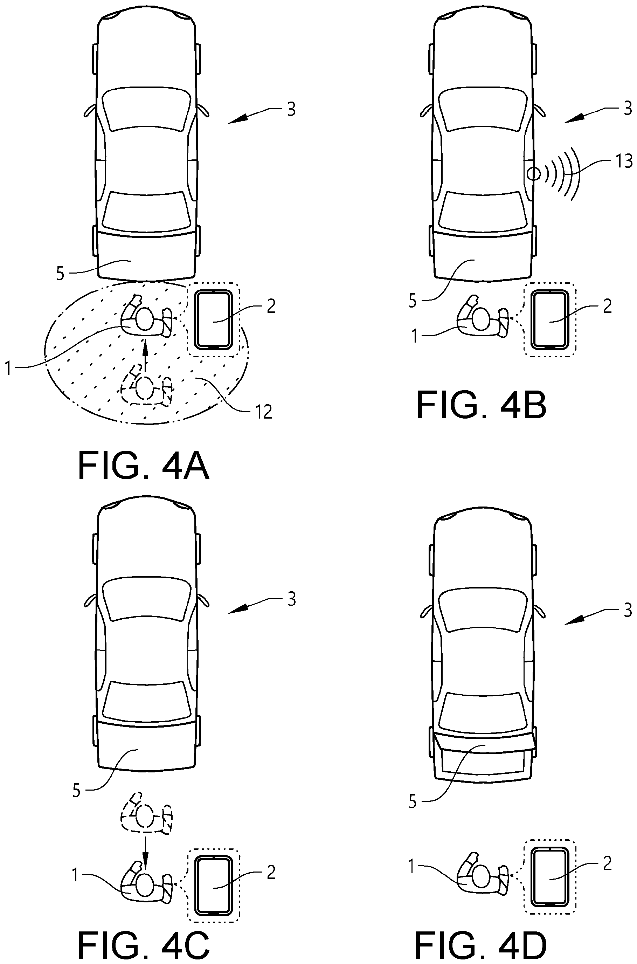

Figs. 4A, 4B, 4C and 4D show a further example embodiment of the method where the tailgate 5 of the vehicle 3 is to be opened by the user 1. The method comprises indicating that the predefined body movement of the user was identified, and activating the vehicle function provided that a second predefined body movement is identified to have been performed thereafter. Preferably, the method also comprises indicating by an audible or visible signal that the predefined body movement of the user 1 was identified.

As schematically shown in Figs. 4A-4D, the user 1 has to stand close to the tailgate 5 within an allowable zone or predetermined area 12 and be faced to the tailgate 5 to be able to control the tailgate 5. In addition, the predefined body movement is to take a step forward. When the user 1 has taken such a step forward, see Fig. 4A, and the predefined body movement is identified to have been performed, the vehicle 3 provides an audible signal 13 indicating to the user 1 that the predefined body movement was identified, see Fig. 4B.

Then, the vehicle function can be activated provided that a second predefined body movement is identified to have been performed. The second predefined body movement is to take a step back, see Fig. 4C, and when the user 1 has taken such a step back and the second predefined body movement is identified to have been performed, the tailgate 5 is opened, see Fig. 4D.

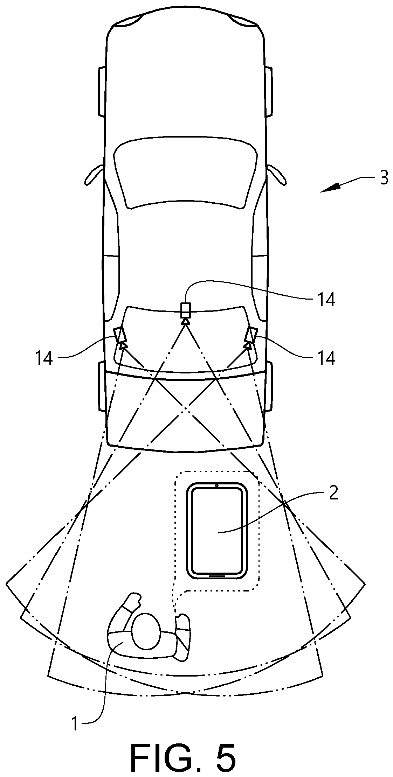

Fig. 5 shows an alternative way of identifying the predefined body movement of the user 1 and/or determining the orientation of the user 1 relative to the vehicle by a camera 14. As previously described, the vehicle function is activated provided that the predefined body movement is identified to have been performed when the user is orientated relative to the vehicle in a predetermined user orientation. The orientation of the user relative to the vehicle can be determined by one or more cameras 14. Optionally, the orientation of the user 1 can be determined at the same time as the camera 14 can be used for identifying the user by facial recognition to ensure that the vehicle function is controlled by a user 1 that is authorised. Alternatively, the key device 2 is used for the authorisation as previously described hereinabove. When a key device is not used, said one or more cameras can also be used for identifying the predefined body movement of the user.

In the example embodiments described herein, detection of the position, orientation and/or movement of the key device 2 can be performed by using ultra-wideband (UWB) communication between the vehicle 3 and the key device 2.

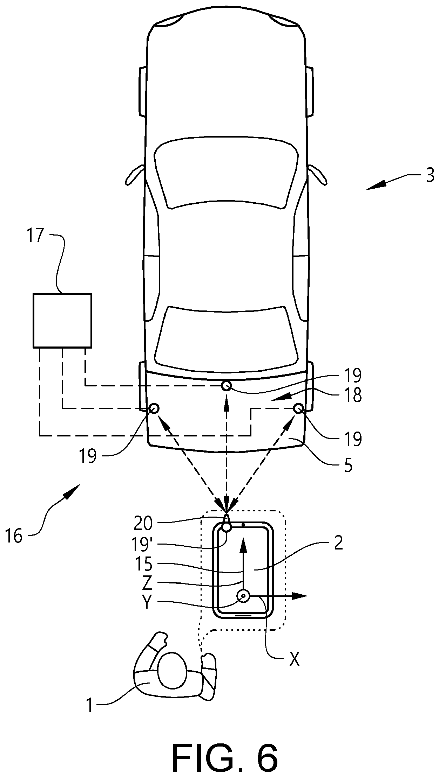

The key device 2 is suitably of a type that has an axis 15 of orientation that is detectable and the orientation of the key device 2 is determined based on a detection of a direction of the axis 15 of orientation. See Fig. 6. The key device may have three such axes forming a cartesian coordinate system with axes X, Y and Z being perpendicular to each other.

Fig. 6 shows a vehicle 3 and an arrangement 16 for controlling a function of a vehicle by a predefined body movement performed by a user 1 of the vehicle 3. The arrangement 16 comprises a control unit 17 controlling the vehicle function, and preferably a key device 2 carried by the user 1 by which key device the predefined body movement of the user 1 can be identified, and an orientation sensor 18. The control unit 17 is suitably arranged in the vehicle 3. In this embodiment example, the control unit 17 controls the tailgate 5 of the vehicle 3. The key device 2 can be a mobile phone.

Software and electronics for identifying the predefined body movement of the user, for example by detecting a movement of the key device 2 carried by the user 1, can be arranged in the vehicle and/or the key device. In the same way, software and electronics for determining the orientation of the user 1 relative to the vehicle 3, can be arranged in the vehicle and/or the key device. The vehicle and/or the key device may comprise one or more processors and/or one or more memory devices or any other components for controlling the function of the vehicle. As it regards the vehicle, such processors, memory devices and other components are preferably arranged in the control unit for controlling the vehicle function.

Although the predefined body movement is suitably identified by repeatedly detecting the orientation of the key device as previously described herein, when using a less complicated predefined body movement together with the predetermined user orientation condition, other ways of identifying the predefined body movement based on any means for detection of a motion arranged in the key device could also be used. Such a motion detection means may comprise an accelerometer, a gyro sensor, a magnetic field sensor or other equipment. It would also be possible to identify the predefined body movement of the user by one or more cameras, suitably arranged on the vehicle.

The orientation sensor 18 is arranged to determine the orientation of the user 1 relative to the vehicle 3, and the control unit 17 is arranged to activate the vehicle function provided that the predefined body movement is identified to have been performed when the user 1 is orientated relative to the vehicle 3 in the predetermined user orientation.

In the example embodiment illustrated in Fig. 6, the orientation sensor 18 comprises three vehicle ultra-wideband (UWB) communication units 19 arranged at different positions in the vehicle 3 and one key device UWB communication unit 19' arranged in the key device 2. The vehicle UWB communication units 19 and the key device UWB communication unit 19' are arranged to communicate with each other for detecting a position and/or orientation of the key device 2 relative to the vehicle 3.

The position of the key device 2 relative to the vehicle 3 can be detected by applying triangulation and/or trilateration for the UWB communication units 19, 19'. By providing the key device UWB communication unit 19' with two antennas 20, phase difference measurements for detecting the orientation of the key device 2 relative to the vehicle 3 can be performed. Alternatively, each of the vehicle UWB communication units 19 is provided with two antennas.

For example, the phase difference measurement can be used for detection of the axis 15 of orientation of the key device 2, where the knowledge of the change of the axis orientation can be used for deciding whether or not the user is orientated relative to the vehicle in the predetermined user orientation, such as previously described with reference to Figs. 1A and 1B hereinabove.

It is to be understood that the present invention is not limited to the embodiments described above and illustrated in the drawings; rather, the skilled person will recognize that many changes and modifications may be made within the scope of the appended claims.

## Claims

1. A method for controlling a function of a vehicle (3) by a predefined body movement performed by a user (1) of the vehicle, wherein the method comprises identifying the predefined body movement of the user (1), determining the orientation of the user (1) relative to the vehicle (3), and activating the vehicle function (5) provided that the predefined body movement is identified to have been performed when the user (1) is orientated relative to the vehicle (3) in a predetermined user orientation.

2. A method according to claim 1, **characterized by** detecting a position, orientation and/or movement of a key device (2) carried by the user.

3. A method according to claim 2, **characterized by** detecting the position, orientation and/or movement of the key device (2) by ultra-wideband (UWB) communication between the vehicle (3) and the key device (2).

4. A method according to claim 2 or 3, **characterized by** identifying the predefined body movement of the user (1) by detecting the movement of the key device (2) carried by the user.

5. A method according to any of claims 2-4, **characterized by** identifying the predefined body movement of the user (1) by repeatedly detecting the orientation of the key device (2).

6. A method according to claim 5, wherein the predefined body movement is a motion causing the key device (2) to move along a predefined pattern (9) comprising a plurality of different orientations of the key device (2).

7. A method according to any of claims 2-6, **characterized by** determining the orientation of the user (1) relative to the vehicle (3) by detecting the orientation of the key device (2).

8. A method according to claim 7, **characterized by** determining the orientation of the user (1) relative to the vehicle (3) by repeatedly detecting the orientation of the key device (2) when the user is moving in a direction towards the vehicle (3) or the vehicle function (5).

9. A method according to claim 7 or 8, **characterized by** detecting the orientation of the key device (2) at a first point in time (t₁) when the user (1) is positioned at a first distance from the vehicle (3) and at a second point in time (t₂) when the user (1) is positioned at a second distance from the vehicle (3), wherein the second distance is shorter than the first distance, wherein the second point in time (t₂) is immediately prior to that the predefined body movement of the user is detected, and determining the orientation of the user (1) relative to the vehicle (3) by comparing the orientation of the key device (2) in the first point in time and the orientation of the key device (2) in the second point in time.

10. A method according to claim 1, **characterized by** identifying the predefined body movement of the user (1) and/or determining the orientation of the user (1) relative to the vehicle by a camera (14).

11. A method according to any preceding claim, wherein the predetermined user orientation is fulfilled when the user (1) is facing the vehicle (3).

12. A method according to any of claims 1-10, wherein the predetermined user orientation is fulfilled when the user (1) is facing the vehicle function (5).

13. A method according to any preceding claim, wherein the predefined body movement is a turning motion (9).

14. A method according to any preceding claim, wherein the predefined body movement ends in an orientation of the user (1) where the predetermined user orientation is fulfilled.

15. A method according to any preceding claim, **characterized by** determining the position of the user (1) relative to the vehicle (3) and activating the vehicle function provided that the user is positioned within a predetermined distance from the vehicle (3) or the vehicle function (5).

16. A method according to any preceding claim, **characterized by** determining the position of the user (1) relative to the vehicle (3) and activating the vehicle function provided that the user is positioned within a predetermined area.

17. A method according to any preceding claim, **characterized by** checking the identity of the user (1) and activating the vehicle function provided that the user is authorized to control the vehicle function (5).

18. A method according to any preceding claim, wherein the key device (2) is of a type that has an axis (15) of orientation that is detectable and the orientation of the key device (2) is determined based on a detection of a direction of the axis (15) of orientation.

19. A method according to any preceding claim, wherein the key device (2) is a mobile telephone.

20. A method according to any preceding claim, wherein a plurality of different vehicle functions are controllable by the predefined body movement.

21. A method according to claim 20, wherein at least one of the plurality of different vehicle functions is activated provided that the predefined body movement is identified to have been performed when the user (1) is positioned within a predetermined distance from said at least one vehicle function (5).

22. A method according to any preceding claim, wherein the method comprises indicating that the predefined body movement of the user (1) was identified, and activating the vehicle function provided that a second predefined body movement is identified to have been performed thereafter.

23. A method according to any preceding claim, **characterized by** indicating by an audible or visible signal (13) that the predefined body movement of the user (1) was identified.

24. An arrangement (16) for controlling a function of a vehicle (3) by a predefined body movement performed by a user (1) of the vehicle, wherein the arrangement comprises a control unit (17) controlling the vehicle function (5), and an orientation sensor (18) which is arranged to determine the orientation of the user (1) relative to the vehicle (3), and wherein the control unit (17) is arranged to activate the vehicle function (5) provided that the predefined body movement is identified to have been performed when the user (1) is orientated relative to the vehicle (3) in a predetermined user orientation.

25. An arrangement according to claim 24, **characterized in that** the arrangement comprises a key device (2) carried by the user (1) by which key device the predefined body movement of the user can be identified.

26. An arrangement according to claim 25, **characterized in that** the orientation sensor (18) comprises at least three vehicle ultra-wideband (UWB) communication units (19) arranged at different positions in the vehicle (3) and one key device UWB communication unit (19') arranged in the key device (2), the vehicle UWB communication units (19) and the key device UWB communication unit (19') being arranged to communicate with each other for detecting a position and/or orientation of the key device (2) relative to the vehicle (3).

27. An arrangement according to claim 26, **characterized in that** each of the vehicle UWB communication units (19) or the key device UWB communication unit (19') has two antennas (20) enabling phase difference measurements for detecting the orientation of the key device (2) relative to the vehicle (3).

28. A vehicle (3) comprising an arrangement (16) according to any of claims 24-27.
